# EUROPÄISCHE PATENTSCHRIFT

(11) **EP 0 902 213 B1**
(45) Veröffentlichungstag und Bekanntmachung des Hinweises auf die Patenterteilung: **08.05.2002**
(21) Anmeldenummer: 97890258.3
(22) Anmeldetag: 29.12.1997
(51) Int. Cl.: F16H 47/04, F16H 57/02

(54) **Leistungsverzweigungsgetriebe und dessen Einbau in ein Getriebegehäuse**
Power-split-transmission and its mounting in a gear box
Transmission à division de puissance et montage et transmission dans une boite de vitesses

(30) Priorität: 09.09.1997 AT 150997
(43) Veröffentlichungstag der Anmeldung: 17.03.1999
(73) Patentinhaber: ZF FRIEDRICHSHAFEN Aktiengesellschaft, 88038 Friedrichshafen (DE)
(72) Erfinder: Wöntner, Gebhard, 4493 Wolfern (AT)
(74) Vertreter: Kovac, Werner, Dipl.-Ing.

(56) Entgegenhaltungen:
- DE-A1- 3 621 166
- US-A- 3 902 567
- US-A- 3 922 931
- US-A- 5 421 790

## Beschreibung

Die Erfindung handelt von einem Leistungsverzweigungsgetriebe, bestehend aus einer Hydrostateinheit und einer ein Summierungsgetriebe und Bereichsgetriebe enthaltenden mechanischen Getriebeeinheit, die in einem gemeinsamen Gehäuse mit Deckel untergebracht sind, wobei die mechanische Getriebeeinheit am Gehäusedeckel angeordnet und als geschlossene Baugruppe in das Gehäuse einsetzbar ist. Die mechanische Getriebeeinheit stellt den mechanischen Zweig dar, die Hydrostateinheit den hydrostatischen.

Derartige Anordnungen können als bekannt gelten.

Leistungsverzweigungsgetriebe mit den erwähnten Komponenten sind stufenlos regelbare Getriebe hohen Wirkungsgrades, die vor allem bei Schleppern die konventionellen Stufengetriebe mit 30 Schaltstufen und mehr ersetzen sollen. Sie unterscheiden sich von letzteren grundsätzlich, das Summierungsgetriebe ist ein komplexes Planetengetriebe, die Bereichsgetriebe werden mittels hydraulisch betätigter Kupplungen bzw Bremsen geschaltet. Sie sind daher sowohl mechanisch als auch hinsichtlich ihrer Steuerung sehr kompliziert. Derartige Getriebe sind beispielsweise beschrieben in den DE-A1 40 27 724, 44 01 509 und 195 25 823, sowie in der EP 482 039 B2.

Ihr Einbau ihrer Komponenten in das Gehäuse, bzw deren Austausch und Funktionsprüfung ist daher schwierig und arbeitsaufwendig, vor allem wenn es sich um ein Schleppergetriebe handelt, dessen Gehäuse mit Motorblock und Hinterachse verschraubt die Grundstruktur eines Schleppers bildet. Dazu kommt noch, daß für die Schmierung, Steuerung und für den Hydrostaten zahlreiche Fluidverbindungen erforderlich sind, die üblicherweise durch Schläuche und Rohre hergestellt sind, und daß der Hydrostat wegen seiner Geräuschentwicklung eine körperschallentkoppelnde Aufhängung braucht. All das erschwert die Montage weiter und die Verbindungsteile machen das Getriebe störungsanfällig.

Aus der EP 115 794 A1 ist es zwar bekannt, in lastschaltbaren Zahnräderwechselgetrieben konventioneller Bauart ein Vorgelege mit seinen Kupplungen als geschlossene Baugruppe von aussen durch eine mittels Deckel verschließbare Öffnung ins Gehäuse einzufügen, wozu der Deckel mit Tragarmen versehen sein kann. Das Vorgelege ist jedoch nur eine einzelne Welle, die leicht an ihren beiden Enden zu lagern ist und ansonsten nur mit den zueinander koaxialen Getriebehauptwellen, der Eingangs- und der Ausgangswelle, zusammenwirkt.

Weiters ist es aus DE 40 22 049 A1 bekannt, ein hydrostatisches (und somit auch grundsätzlich anderes) Getriebe mittels querliegender Stangen körperschallentkoppelt in einem Gehäuse aufzuhängen. Damit kann das Getriebe zwar als Baugruppe von aussen in das Gehäuse eingesetzt werden, jedoch gestaltet sich die Herstellung der für die Steuerung erforderlichen Verbindungen schwierig und die querliegenden Stangen machen die Unterbringung weiterer Getriebeelemente im Gehäuse schier unmöglich.

Es ist daher Ziel der Erfindung, das Gehäuse eines Verzweigungsgetriebes so zu gestalten, daß die Komponenten des Getriebes bei geringstem Bauaufwand leicht zu montieren und demontieren und seine Komponenten einfach auszuwechseln sind, daß möglichst wenige störungsanfällige Teile vorkommen und Prüfläufe vor dem Einbau vorgenommen werden können.

Erfindungsgemäß wird diese Aufgabe durch die Merkmale des Anspruchs 1 gelöst.

Die mit dem Antriebsmotor gekuppelte Verteilerwelle nach Merkmal a) von Anspruch 1 kann beim Ausbau des Getriebes im Gehäuse bleiben. Erst dadurch ist möglich, die einzelnen Elemente des Leistungsverzweigungsgetriebes ohne Zerlegen des Gehäuses einzeln einbauen zu können. Die Verteilerwelle ist eine ganz einfache beiderseits im Gehäuse präzise gelagerte Welle, die nur die beiden für die Krafteinleitung in den Hydrostaten und in die Getriebeeinheit bestimmten Zahnräder, aber keine anderen Getriebeelemente, trägt. Eines der Zahnräder kämmt mit dem Hydrostaten, das andere mit der Getriebeeinheit, die beide gemeinsam mit dem Deckel eingesetzt werden.

Gemäß Merkmal b) von Anspruch 1 ist nicht nur die Getriebeeinheit, sondern diese gemeinsam mit der Hydrostateinheit in das Gehäuse einsetzbar und in Verbindung mit den aussen am Deckel montierten Steuerelementen gemäß Merkmal d) vor dem Einsetzen einer Funktionsprüfung unterziehbar.

Merkmal c) von Anspruch 1 macht es zum einen möglich, im Deckel zwei verschiedene Elemente, nämlich die Hydrostateinheit und die mechanische(n) Getriebeeinheit(en) so zu befestigen, daß deren miteinander kämmenden Zahnräder und deren mit den Zahrädern auf der Verteilerwelle kämmenden Zahnräder genau positioniert sind. Zum anderen machen die im Deckel geführten Kanäle störungsanfällige Rohrverbindungen überflüssig, wobei die Passflächen auch gleich als Dichtflächen dienen.

In Weiterverfolgung des Erfindungsgedankens ist die Hydrostateinheit körperschalldämmend mittels radialer Abstützungen an weiteren Passflächen des Deckels montiert und weist zur Drehmomentabstützung einen radial abstehenden Rohrstutzen auf, der in einer Bohrung des Deckels dicht und körperschalldämmend geführt ist und der eine Fluidverbindung zwischen dem Hydrostaten und einem Fluidkanal im Deckel herstellt (Anspruch 2). Der Rohrstutzen erfüllt somit drei Funktionen: erstens dient er der Ableitung des Gegendrehmomentes in den Deckel, ohne radiale Wärmedehnungen der Hydrostateinheit zu behindern; zweitens dient er der Zuleitung von Arbeitsfluid direkt aus dem Deckel, somit ganz ohne Rohrleitung, wenn auch die Pumpe am Deckel angebracht ist; drittens als Dämmelement. Dazu ist der Rohrstutzen im Gehäusedeckel vorzugsweise mittels einer elastischen Büchse geführt, die aus zwei Metallstutzen und einer gummielastischen Zwischenlage besteht (Anspruch 3).

In einer bevorzugten Ausführungsform als Schleppergetriebe durchläuft die Verteilerwelle das Getriebegehäuse in seiner ganzen Länge und stellt die Verbindung zu einer Zapfwelle her (Anspruch 4). Mit anderen Worten: die sowieso vorhandene Antriebswelle für die Zapfwelle ist gleichzeitig die Verteilerwelle. Es ist also eine ganze Welle eingespart. Unter Umständen kann sogar die bei Schleppern übliche Doppelkupplung am Motor durch eine einfache Trennkupplung ersetzt werden.

In Weiterbildung der Erfindung ist im Deckel und unten im Gehäuse je ein Kanal vorgesehen, die im unteren Teil des Deckelflansches dicht aneinander anschließen, wobei der Kanal im Gehäuse einen Ansaugmund bildet (Anspruch 5). Weiters kann aussen am Deckel ein Ölfilter angebracht der, der über Kanäle im Deckel mit dem Ansaugmund bzw der Ölpumpe in Verbindung steht (Anspruch 6). Auf diese Weise erfolgt die gesamte Fluidversorgung (Schmieröl, Arbeitsöl für die Hydrostateinheit und für die Kupplungen in der Getriebeeinheit) ganz ohne freiliegende Rohrleitungen.

In einer vorteilhaften Verfeinerung bilden dann auch die an einer Aussenfläche des Deckels angeordneten Steuerelemente einen Ventilblock (Anspruch 7). Wenn dann weiters der Deckel eine von innen nach aussen führende Bohrung für einen Drehzahlsensor aufweist (Anspruch 8), sind sämtliche für den Betrieb erforderlichen Organe mit kürzesten Kommunikationswegen am Deckel vereint.

Für die Anwendung des Getriebes in Ackerschleppern oder Nutzfahrzeugen ist es besonders vorteilhaft, den Deckel an einer Seitenfläche des Gehäuses anzuordnen (Anspruch 9). Zusätzlich zu dem Vorteil der Austauschbarkeit des Getriebes ohne Zerlegen des Antriebsstranges (Motorblock-Getriebegehäuse-Hinterachse) bei Schleppern wird so auch erreicht, daß nicht einmal das Fahrerhaus (eines Nutzfahrzeuges oder eines Schleppers) hochgeschwenkt bzw abgenommen zu werden braucht.

Im folgenden wird die Erfindung anhand von Abbildungen beschrieben. Es stellen dar:
- Fig.1:: Ein Schema des erfindungsgemäßen Getriebes,
- Fig.2:: Einen vertikalen Längsschnitt durch das Gehäuse eines Ausführungsbeispieles des erfindungsgemäßen Getriebes, mit abgenommenem Deckel,
- Fig.3:: Einen Querschnitt nach III-III in Fig.2.
- Fig.4:: Einen Querschnitt nach IV-IV in Fig.2.
- Fig.5:: Einen Querschnitt nach V-V in Fig.2.
- Fig.6:: Einen Querschnitt nach VI-VI in Fig.2.
- Fig.7:: Einen Querschnitt nach VII-VII in Fig.2.
- Fig.8:: Ein alternatives Detail zu Fig.6.

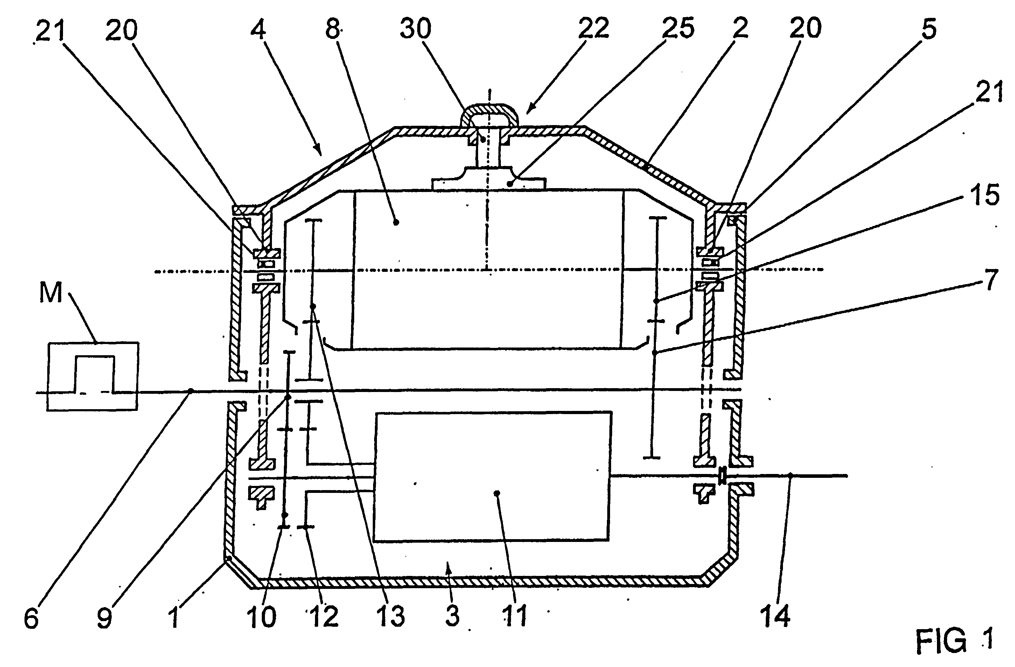

In Fig.1 ist das Gehäuse eines hydrostatisch-mechanischen Leistungsverzweigungsgetriebes mit 1 und dessen Deckel mit 2 bezeichnet, wobei die Form des Gehäuses und des Deckels der jeweiligen Konzeption und Anordnung der Getriebeelemente beliebig angepasst werden können. Im Gehäuse 1 finden sich die Getriebekomponenten, die einen mechanischen Zweig 3 und einen hydrostatischen Zweig 4 bilden. Der Gehäusedeckel 2 ist auf einen Deckelflansch 5 des Getriebegehäuses 1 von beliebiger Form aufgeschraubt. Eine Antriebswelle 6 ist von einem nur angedeuteten Motor M angetrieben und treibt in der Folge über erste Zahnräder 7,15 einen Hydrostaten 8 und über zweite Zahnräder 9,10 die mechanische Getriebeeinheit 11.

Der Hydrostat 8 besteht beispielsweise aus zwei hydrostatischen Pumpe/Motor-Einheiten, von denen eine verstellbar ist und von denen jeweils eine, je nach Momentenflußrichtung und Betriebszustand, entweder als Pumpe oder als Motor arbeitet. Auf diese Weise ist die Übersetzung der Hydrostateinheit 8 stufenlos variierbar. Der Hydrostat 8 ist seinerseits über einen Zahnradzug 12,13 mit der mechanischen Getriebeeinheit 11 verbunden. In dieser werden die über die beiden Eingangswellen 10,12 eingetragenen Bewegungen überlagert und mittels nachgeschalteter Getriebestufen und Kupplungen bereichsweise umgeschaltet, sodaß über eine Abtriebswelle 14 eine in einem sehr weiten Bereich variierte Drehzahl für den Antrieb etwa eines Fahrzeuges zur Verfügung steht.

In dem Gehäusedeckel 2 befinden sich beiderseits des Hydrostaten 8 je ein Lagerstuhl 20 für dessen radiale Abstützung. Es ist wesentlich, daß diese radiale Abstützung gegenüber dem Gehäusedeckel 2 und nicht gegenüber dem Gehäuse 1 vorgesehen ist. Die Anordnung und Gestaltung elastischer Elemente 21, die das Gehäuse des Hydrostaten 8 schwingungsdämpfend abstützen, kann sehr verschieden sein. Diverse Ausführungsformen sind in der DE 43 00 456 beschrieben. Ungefähr in der Mitte zwischen den beiden Lagerstühlen 20 ist eine Drehmomentabstützung 22 vorgesehen, über die das bei der Drehmomentübersetzung des Hydrostaten entstehende Gegenmoment in den Gehäusedeckel 2 geleitet wird.

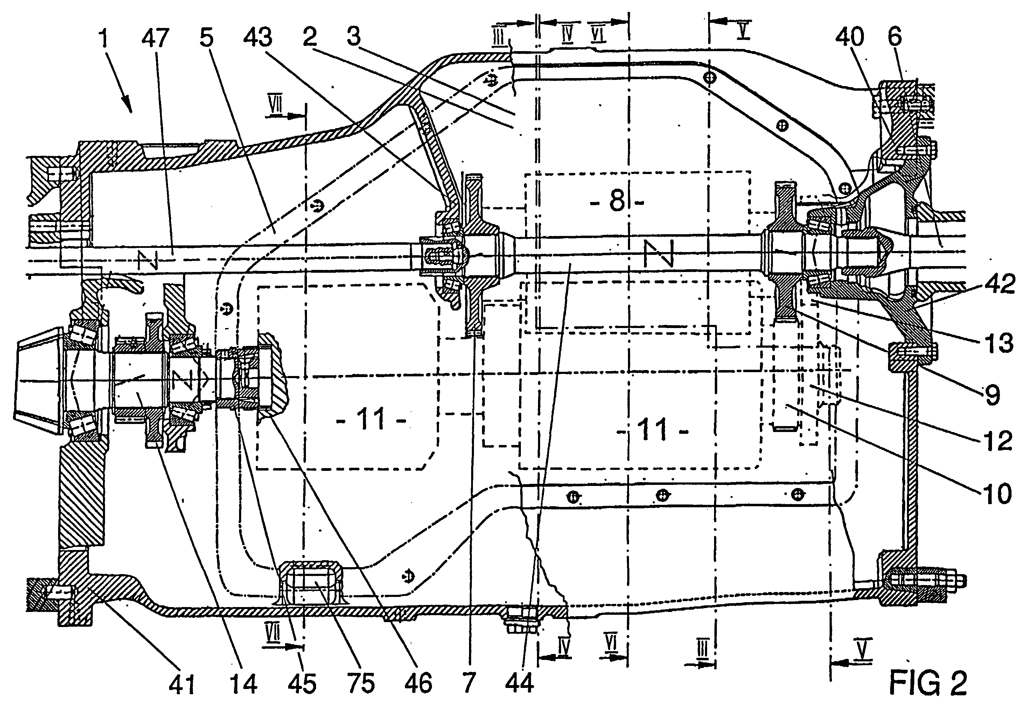

Figur 2 zeigt das Gehäuse 1 mit abgenommenem Deckel, weshalb die Hydrostateinheit 8 und die mechanische Getriebeeinheit 11 nur strichliert angedeutet sind. Deren Achsen liegen hier nicht in einer Ebene sondern, wie anhand der Schnitte zu sehen, an den Eckpunkten eines Dreieckes. Die Gestaltung von Hydrostatund Getriebeeinheit kann im Rahmen der Erfindung sehr verschieden sein. Das Gehäuse 1 ist als Tunnel ausgeführt, mit einem motorseitigen Anschlußflansch 40 und einem hinterachsseitigem Anschlußflansch 41. In ersterem ist ein Lagerkragen 42 und weiter hinten im Getriebe ein Lagerschott 43 vorgesehen, in denen in entsprechenden Wälzlagern eine Verteilerwelle 44 gehäusefest gelagert ist. Auf der Verteilerwelle 44 ist drehfest ein Zahnrad 9 für den Antrieb der mechanischen Getriebeeinheit 11 und ein Zahnrad 7 für den Antrieb der Hydrostateinheit 8 angeordnet. Da diese Zahnräder jeweils in der Nähe eines Lagers sind, ist deren Führung sehr präzise. Der Abtrieb erfolgt von der mechanischen Getriebeeinheit 11 über eine längsverschiebliche Montagemuffe 45 auf die gehäusefeste Ausgangswelle 14. Die Montagemuffe 45 ist in gelöster Stellung abgebildet. Nach dem die mechanische Einheit im Gehäuse eingebaut ist, wird sie in eine entsprechende Innen-Keilverzahnung 46 in der Ausgangswelle der mechanischen Getriebeeinheit 11 eingeschoben. An die Verteilerwelle 44 schließt nach hinten drehfest eine Zapfwelle 47 an. Diese ist somit am gesamten Getriebe vorbeigeführt und dreht sich mit Motordrehzahl. So dient die Verteilerwelle gleichzeitig dem Antrieb der Zapfwelle.

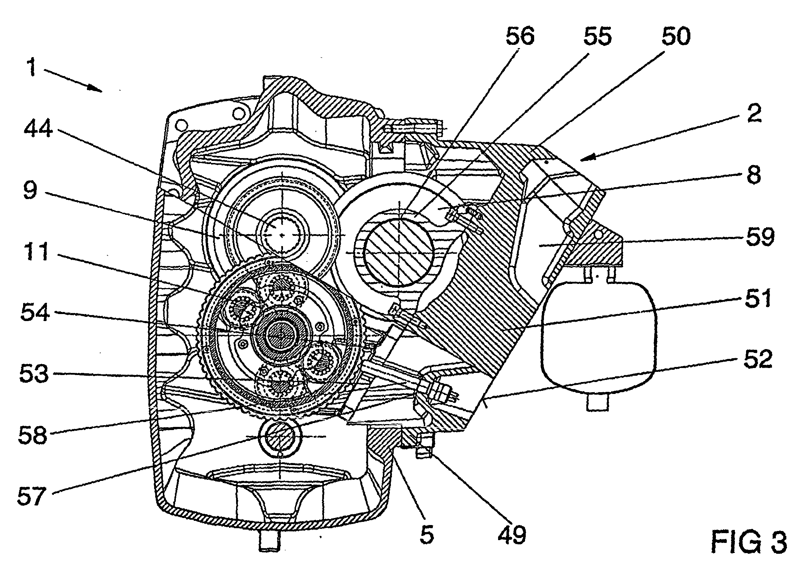

In Figur 3 ist wieder zu erkennen, daß das Getriebegehäuse 1 ein geschlossener Kasten mit seitlich einem senkrechten Deckelflansch 5 ist. Im Inneren des Gehäuses 1 ist oben die Verteilerwelle 44 zu sehen, darunter die mechanische Getriebeeinheit 11, die von dem Zahnrad 9 der Verteilerwelle 44 angetrieben ist. Unterhalb der mechanischen Getriebeeinheit 11 ist noch eine Welle für einen zusätzlichen Vorderradantrieb angedeutet. An den Deckelflansch 5 des Gehäuses ist ein Deckel 2 mittels eines Flansches 49 angeschraubt. Der Deckel 2 ist im Querschnitt normal zur Flanschebene etwa dreieckig, um in seinem oberen Teil Raum für die Hydrostateinheit 8 zu bieten. Im Querschnitt besteht der Deckel 2 aus einer oberen Wand 50 und einer schrägen dicken Grundplatte 51, die abwärts-einwärts geneigt ist. Diese Grundplatte 51 hat eine bearbeitete Außenfläche 52 und innen mindestens eine Paßfläche 53. Auf dieser Paßfläche 53 sind mit entsprechend genau bearbeiteten Gegenflächen Lagerstühle 54 für die mechanische Getriebeeinheit 11 genau, z.B. mittels Paßstiften, befestigt. Durch diese Lagerstühle hindurch erfolgt die Ölzufuhr für die Schmierung und Betätigung der Kupplungen der mechanischen Getriebeeinheit 11. Ebenso sind auf der Paßfläche 53 radiale Abstützungen 55 für die Hydrostateinheit 8 angebracht. Zur Körperschalldämmung sind zwischen der radialen Abstützung 55 und dem Körper der Hydrcstateinheit elastische Dämmringe 56 angeordnet. Auf diese Weise ist sowohl die mechanische Getriebeeinheit 11 als auch die Hydrostateinheit 8 paßgenau im Deckel 2 befestigt und beide können gemeinsam mit dem Deckel montiert werden. In dem Deckel 2 befindet sich weiters mindestens eine Bohrung 57 für einen Drehzahlsensor 58, der der Steuereinrichtung die Drehzahl einzelner Glieder angebende Signale liefert. Im oberen Teil der Grundplatte 51 des Deckels 2 ist noch ein Fluidkanal 59 zu sehen.

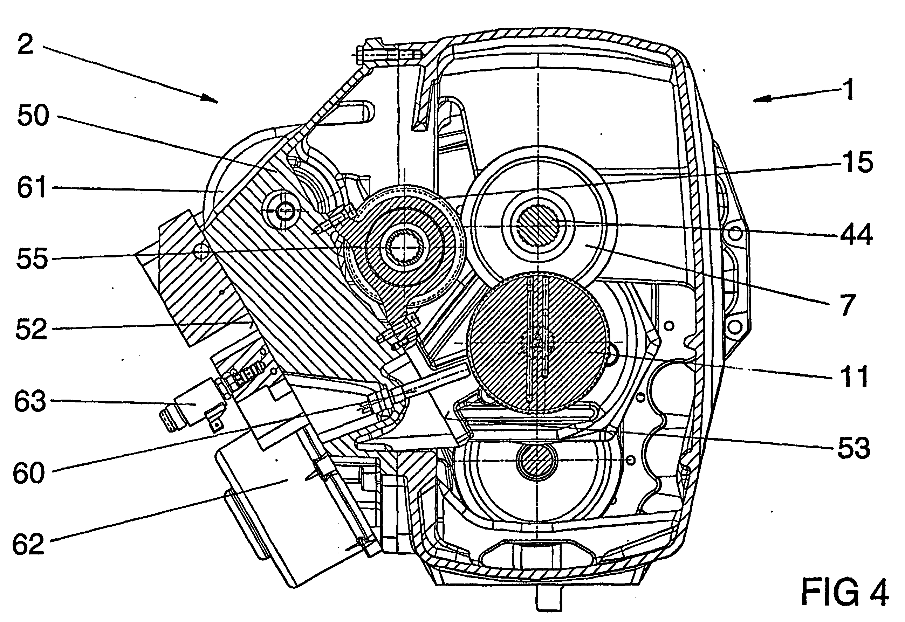

In Figur 4 ist ein weiterer Drehzahlsensor 60 zu erkennen. Im oberen Teil der Grundplatte 51 ist eine Ölpumpe 61 vorgesehen. Sie wird etwa von dem Zahnrad 15 aus angetrieben. Im unteren Teil der Grundplatte 51 ist an der Außenfläche 52 ein Ölfilter 62 direkt dichtend angeschraubt. Ein Steuerelement 63, beispielsweise ein Ventilblock, ist ebenso auf die sauber bearbeitete Aussenfläche aufgeschraubt.

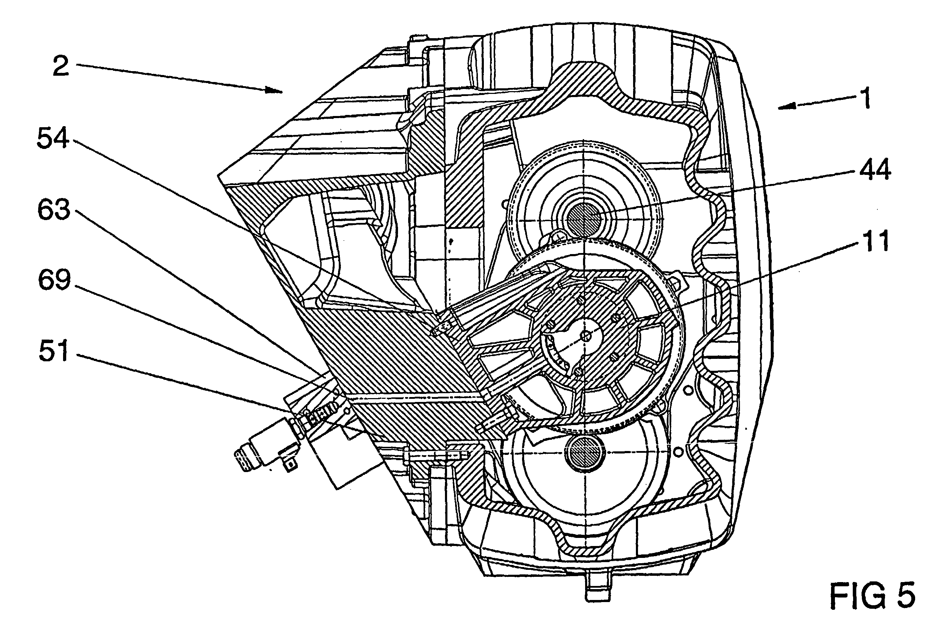

In Figur 5 ist die Hydrostateinheit weggelassen. Zu erkennen ist ein Fluidkanal 69 für die Schmierung der mechanischen Getriebeeinheit 11. Er führt durch die Grundplatte 51 des Deckels 2 hindurch direkt in den Lagerstuhl 54.

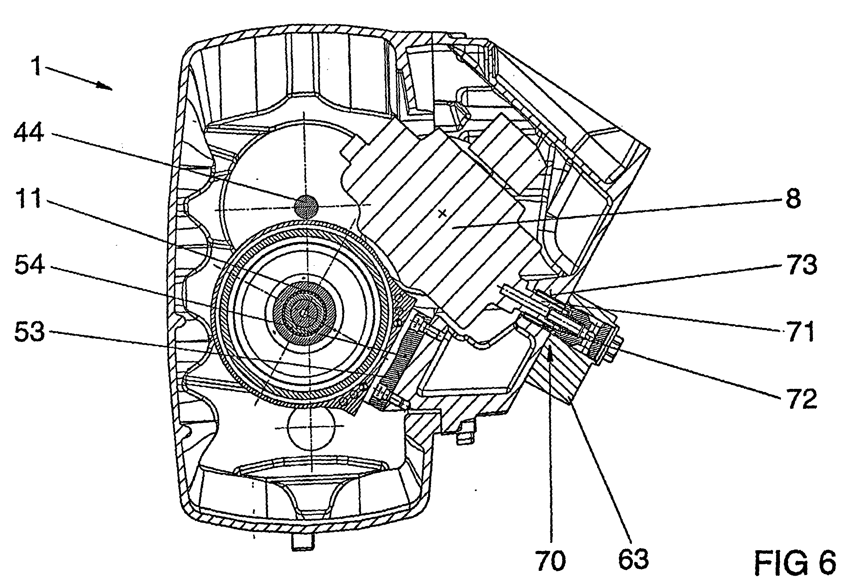

In Figur 6 ist die Hydrostateinheit 8 in ihren Umrissen eingezeichnet. Ihre radiale Abstützung wurde anhand der Figuren 3 und 4 beschrieben. Zusätzlich ist eine Drehmomentabstützung 70 vorgesehen, die aus einem radialen Rohrstutzen 71 besteht, der unter Zwischenschaltung einer elastischen Büchse 72 in einer Bohrung 73 der Grundplatte steckt. Der Rohrstutzen 71 dient nicht nur der Drehmomentabstützung sondern stellt auch eine durch Wärmedehnungen nicht beeinträchtigte Leitungsverbindung zu dem Steuerelement 63 her.

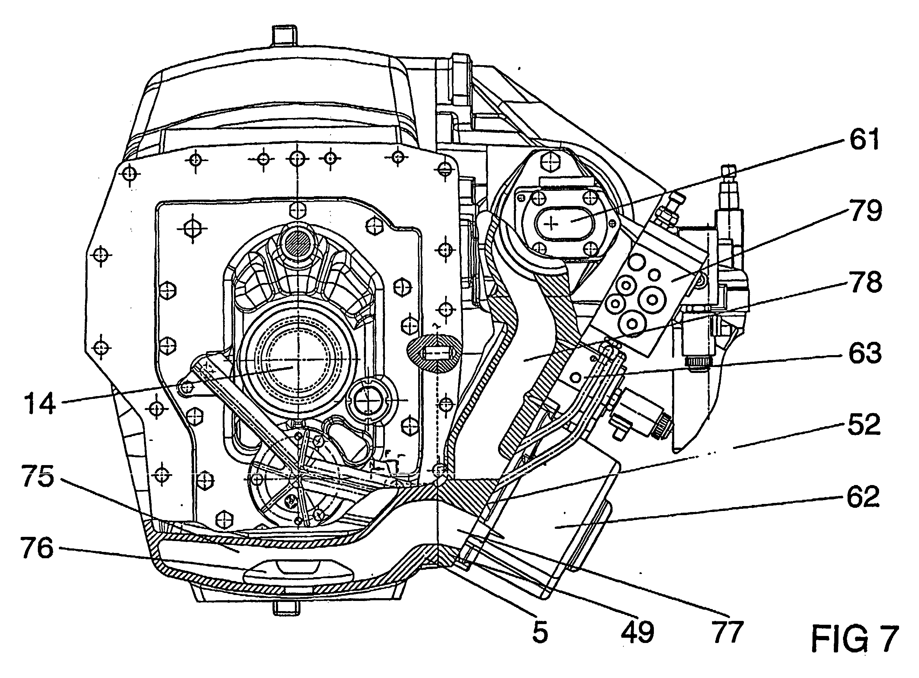

Figur 7 zeigt das erfindungsgemäße Getriebe zum Teil in Ansicht. Aufgerissen ist es dort, wo im Boden ein Kanal 75 (siehe auch Figur 2) mit einem Ansaugmund 76 vorgesehen ist. Dieser Kanal führt zum Deckelflansch 5 und findet seine Fortsetzung in einem Deckelkanal 77, im Deckel 2, der zu einem Ölfilter 62 an der Außenfläche 52 führt. Von diesem fließt das Öl weiter durch einen Kanal 78 in die ebenfalls am Deckel anschließende Ölpumpe 61 und von dort zu einem weiteren Steuerelement 79. Somit ist die gesamte Ölzufuhr vom Sumpf im Gehäuseboden über Filter 62 und Pumpe 61 und anschließenden Steuerelementen 63,79 gehäusefest und ohne Rohleitungen oder Druckschläuche. Insbesondere sind alle wesentlichen Teile am Deckel 2 angeordnet und mittels in den Deckel eingegossener Kanäle, z.B. 77,78,69 (Figur 5), 59 (Figur 3) verbunden.

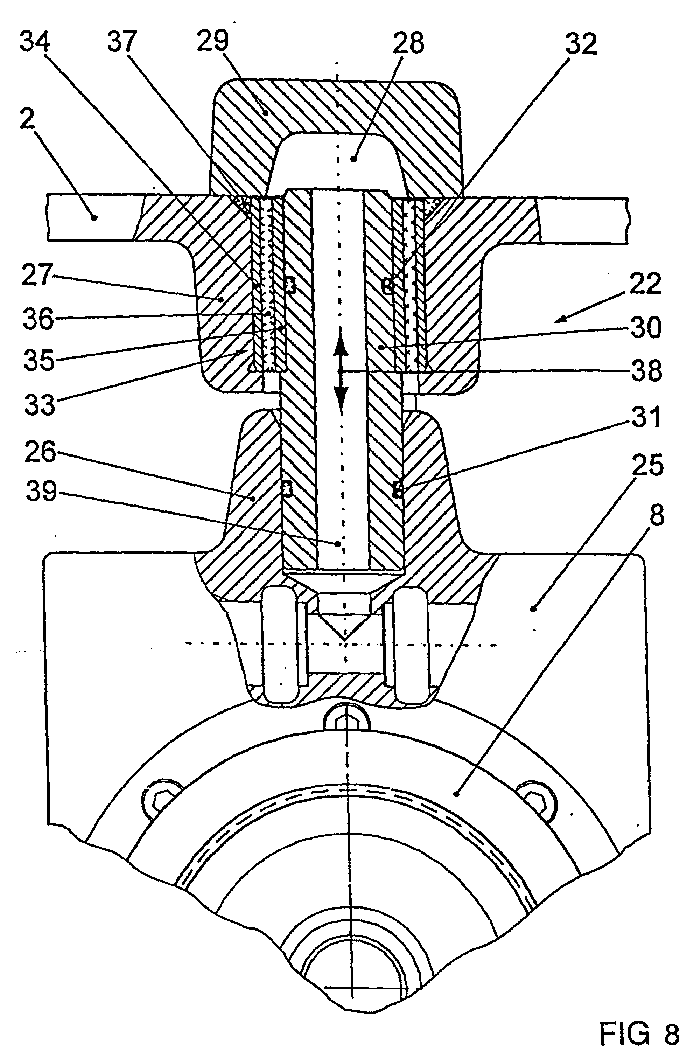

In Fig.8 ist eine alternative Form der Drehmomentabstützung 70 detailliert dargestellt. Der Hydrostat 8 hat einen Ventilblock mit einem Kragen 26, der Gehäusedeckel 2 einen einwärts gerichteten Kragen 27. In der dargestellten Variante ist noch ein Zuleitungskanal 28 ausgebildet, der auch im Inneren des Deckels 2 sein könnte. Dieser Zuleitungskanal 28 dient der Zufuhr der Betriebsflüssigkeit für den Hydrostaten aus einem Getriebesumpf mittels der Ölpumpe (61), auch wieder durch den Deckel.

Die beiden Kragen 26,27 nehmen einen Rohrstutzen 30 auf, wobei jeweils O-Ringe 31,32 vorgesehen sind. Zwischen dem Kragen 27 und dem Rohrstutzen 30 ist eine elastische Büchse 33 vorgesehen, die aus einem äusseren Metallstutzen 34 und einem inneren Metallstutzen 35 besteht, die durch eine elastische Zwischenlage 36 miteinander verbunden sind, beispielsweise durch Einvulkanisieren des gummielastischen Materials der Zwischenlage 36 zwischen die beiden Metallstutzen 34,35.

Wenn der Zuleitungsteil 29 auf dem Deckel 2 abnehmbar befestigt ist, wie gezeigt, ist auch ein Dichtring 37 vorgesehen. Der Rohrstutzen 30 ist somit gegenüber beiden Kragen 26,27 in radialer Richtung 38 verschiebbar und gestattet so die radiale Ausdehnung des Hydrostaten 8 gegenüber dem Getriebegehäuse 1 bzw. dem Deckel 2. Die elastische Büchse 33 sorgt für die Körperschallisolation und Aufnahme von Schwingungen bzw. Laststössen und die Einleitung des Gegendrehmomentes in das Gehäuse. Der vom Rohrstutzen 30 gebildete Kanal 39 stellt die Verbindung zwischen dem Zuleitungskanal 28 und einem Ventilblock 25 dar.

## Patentansprüche

1. Leistungsverzweigungsgetriebe bestehend aus einer Hydrostateinheit (8) und einer ein Summierungsgetriebe und Bereichsgetriebe enthaltenden mechanischen Getriebeeinheit (11), die in einem gemeinsamen Gehäuse (1) mit einem Deckel (2) untergebracht sind, wobei die mechanische Getriebeeinheit am Gehäusedeckel angeordnet und als geschlossene Baugruppe in das Gehäuse einsetzbar ist, **dadurch gekennzeichnet, daß**
a) eine mit einem Antriebsmotor (M) gekuppelte Verteilerwelle (44) im Gehäuse (1) gelagert ist, auf welcher drehfest je ein Zahnrad (7,9) für den Antrieb der Hydrostateinheit (8) und der mechanischen Getriebeeinheit (11) angeordnet ist,
b) die Hydrostateinheit (8) an der Innenseite des Deckels (2) befestigt ist und ein Hydrostateingangszahnrad (15) und ein Hydrostatausgangszahnrad (13) hat, wobei das Hydrostateingangszahnrad (15) mit dem entsprechenden Zahnrad (7) auf der im Gehäuse gelagerte Verteilerwelle (44) und das Hydrostatausgangszahnrad (13) mit einem Eingangszahnrad (12) der mechanischen Getriebeeinheit (11) kämmt,
c) der Deckel (2) innen eine Passfläche (53) aufweist, die mit mindestens einer Gegenfläche eines Lagerstuhles (54) der mechanischen Getriebeeinheit (11) zusammenwirkt, wobei in der Passfläche (53) im Deckel (2) vorgesehene Fluidkanäle (69) münden,
d) an der Aussenfläche (52) des Deckels (2) Steuerelemente (63,79) angeordnet sind, die mit den Fluidkanälen (69) in Verbindung stehen.

2. Leistungsverzweigungsgetriebe nach Anspruch 1, **dadurch gekennzeichnet, daß** die Hydrostateinheit (8) körperschalldämmend mittels radialer Abstützungen (55) an der Passfläche (53) des Deckels (2) montiert ist und als Drehmomentabstützung (70) einen radial abstehenden Rohrstutzen (71) aufweist, der in einer Bohrung (73) des Deckels dicht und körperschalldämmend geführt ist und der eine Fluidverbindung zwischen der Hydrostateinheit und einem Steuerelement (63) im bzw. am Deckel (2) herstellt.

3. Leistungsverzweigungsgetriebe nach Anspruch 2, **dadurch gekennzeichnet, daß** der Rohrstutzen (71) im Gehäusedeckel (2) mittels einer elastischen Büchse (72) geführt ist, die aus zwei Metallstutzen und einer gummielastischen Zwischenlage besteht.

4. Leistungsverzweigungsgetriebe nach Anspruch 1, **dadurch gekennzeichnet, daß** die Verteilerwelle (44) das Getriebegehäuse (1) in seiner ganzen Länge durchläuft und zusätzlich dem Antrieb einer Zapfwelle (47) dient.

5. Leistungsverzweigungsgetriebe nach Anspruch 1 mit einer am Deckel angeordneten Ölpume (61), **dadurch gekennzeichnet, daß** im Deckel (2) und unten im Gehäuse (1) je ein Kanal (75,77) vorgesehen ist, welche Kanäle im unteren Teil des Deckelflansches (5) dicht aneinander anschließen, wobei der Kanal (75) im Gehäuse (1) einen Ansaugmund (76) bildet.

6. Leistungsverzweigungsgetriebe nach Anspruch 5, **dadurch gekennzeichnet, daß** aussen am Deckel (2) ein Ölfilter (62) angebracht ist, das über Kanäle (77,78) im Deckel mit dem Ansaugmund (76) bzw. der Ölpumpe (61) in Verbindung steht.

7. Leistungsverzweigungsgetriebe nach Anspruch 1, **dadurch gekennzeichnet, daß** die an einer Aussenfläche (52) des Deckels (2) angeordneten Steuerelemente einen Ventilblock (63) umfassen.

8. Leistungsverzweigungsgetriebe nach Anspruch 1, **dadurch gekennzeichnet, daß** der Deckel (2) eine von innen nach aussen führende Bohrung (57) für einen Drehzahlsensor (58,60) aufweist.

9. Leistungsverzweigungsgetriebe nach Anspruch 1, **dadurch gekennzeichnet, daß** der Deckel an einer Seitenfläche des Gehäuses angeordnet ist.

## Claims

1. A power split transmission comprising a hydrostatic unit (8) and a mechanical gear unit (11) containing a summator gearing and gear stages, said hydrostatic unit and mechanical gear unit being accommodated in a common housing
(1) having a cover (2), in which arrangement the mechanical gear unit is arranged on the housing cover and may be inserted into the housing as a closed module, **characterised in that**
a) a distributor shaft (44) coupled to a drive motor (M) is mounted in the housing (1), a gear-wheel (7, 9) for driving the hydrostatic unit (8) and the mechanical gear unit (11) being arranged in each case in torsion-resistant manner on said distributor shaft,
b) the hydrostatic unit (8) is fixed to the inside of the cover (2) and has a hydrostatic input gear-wheel (15) and a hydrostatic output gear-wheel (13), the hydrostatic input gear-wheel (15) meshing with the corresponding gear-wheel (7) on the distributor shaft (44) mounted in the housing, and the hydrostatic output gear-wheel (13) meshing with an input gear-wheel (12) of the mechanical gear unit (11),
c) the cover (2) has a fitting surface (53) on the inside, which cooperates with at least one counter surface of a thrust bearing (54) of the mechanical gear unit (11), fluid channels (69) provided in the cover (2) leading to the fitting surface (53),
d) control elements (63, 79) are arranged on the outer surface (52) of the cover (2) and are in communication with the fluid channels (69).

2. A power split transmission according to Claim 1, **characterised in that** the hydrostatic unit (8) is mounted on the fitting surface (53) of the cover (2) in structure-borne noise damping manner by means of radial supports (55), and has a radially protruding connecting sleeve (71), which acts as a means (70) for supporting the torque load, is guided in a bore (73) in the cover in sealed and structure-borne noise damping manner and provides a fluid connection between the hydrostatic unit and a control element (63) in or on the cover (2).

3. A power split transmission according to Claim 2, **characterised in that** the connecting sleeve (71) is guided in the housing cover (2) by means of an elastic bush (72) comprising two metal connecting pieces and a rubber-elastic intermediate layer.

4. A power split transmission according to Claim 1, **characterised in that** the distributor shaft (44) passes through the entire length of the gear housing (1) and additionally serves for driving a power take-off shaft (47).

5. A power split transmission according to Claim 1, having an oil pump (61) arranged on the cover, **characterised in that** a channel (75, 77) is provided in each case in the cover (2) and at the bottom of the housing (1), which channels follow one another in sealed manner in the lower part of the cover flange (5), the channel (75) forming an intake orifice (76) in the housing (1).

6. A power split transmission according to Claim 5, **characterised in that** an oil filter (62) is mounted on the outside of the cover (2) and is in communication with the intake orifice (76) and the oil pump (61) by way of channels (77, 78) in the cover.

7. A power split transmission according to Claim 1, **characterised in that** the control elements arranged on an outer surface (52) of the cover (2) comprise a valve block (63).

8. A power split transmission according to Claim 1, **characterised in that** the cover (2) has a bore (57) leading from the inside out for a speed sensor (58, 60).

9. A power split transmission according to Claim 1, **characterised in that** the cover is arranged on a lateral surface of the housing.

## Revendications

1. Transmission à ramification de la puissance, composée d'une unité hydrostatique (8) et d'une unité de transmission mécanique (11) comprenant une transmission d'addition et une transmission de gamme qui sont logées dans un carter commun (1) pourvu d'un couvercle (2), dans laquelle l'unité de transmission mécanique est fixée au couvercle du carter et peut être logée dans le carter sous la forme d'un groupe fermé, **caractérisée en ce que**
a) un arbre de répartition (44) accouplé à un moteur d'entraînement (M) est tourillonné dans le carter (1), arbre sur lequel sont montés solidairement en rotation des pignons (7, 9) respectivement pour l'entraînement de l'unité hydrostatique (8) et de l'unité de transmission mécanique (11),
b) l'unité hydrostatique (8) est fixée à la face intérieure du couvercle (2) et comprend un pignon d'entrée hydrostatique (15) et un pignon de sortie hydrostatique (13), le pignon d'entrée hydrostatique (15) engrenant avec le pignon correspondant (7) monté sur l'arbre de répartition (44) tourillonné dans le carter et le pignon de sortie hydrostatique (13) engrenant avec un pignon d'entrée (12) de l'unité de transmission mécanique (11),
c) le couvercle (2) est pourvu intérieurement d'une surface ajustée (53) qui coopère avec au moins une surface conjuguée d'un support de palier (54) de l'unité de transmission mécanique (11), des conduits de fluide (69) ménagés dans le couvercle (2) débouchant dans la surface ajustée (53),
d) des éléments de commande (63, 79) qui sont en communication avec les conduits de fluide (69) sont agencés sur la surface extérieure (52) du couvercle (2).

2. Transmission à ramification de la puissance selon la revendication 1, **caractérisée en ce que** l'unité hydrostatique (8) est montée, avec atténuation de la transmission des sons dans les solides, au moyen d'appuis radiaux (55), contre la surface ajustée (53) du couvercle (2) et comporte, comme appui de réaction du couple (70), une tubulure (71) en saillie radiale qui est guidée dans un alésage (73) à joint étanche du couvercle et avec atténuation de la transmission des sons dans les solides, et qui établit une communication pour les fluides entre l'unité hydrostatique et un élément de commande (63) prévu dans ou sur le couvercle (2).

3. Transmission à ramification de la puissance selon la revendication 2, **caractérisée en ce que** la tubulure (71) est guidée dans le couvercle (2) du carter au moyen d'une douille élastique (72) qui est composée de deux supports métalliques et d'une couche intermédiaire ayant l'élasticité du caoutchouc.

4. Transmission à ramification de la puissance selon la revendication 1, **caractérisée en ce que** l'arbre de répartition (44) parcourt le carter (1) de la transmission sur toute sa longueur et sert en outre pour l'entraînement d'un arbre de prise de force (47).

5. Transmission à ramification de la puissance selon la revendication 1 comprenant une pompe à huile (61) fixée au couvercle, **caractérisée en ce que**, dans le couvercle (2) et dans la partie basse à l'intérieur du carter (1), sont prévus des conduits respectifs (75, 77) qui se raccordent l'un à l'autre par une jonction étanche dans la partie inférieure de la bride (5) du couvercle, le conduit (75) formant une bouche d'aspiration (76) dans le carter (1).

6. Transmission à ramification de la puissance selon la revendication 5, **caractérisée en ce qu'**un filtre à huile (62) est monté extérieurement sur le couvercle (2) et est en communication respectivement avec la bouche d'aspiration (76) et avec la pompe à huile (61) par l'intermédiaire de conduits (77, 78) ménagés dans le couvercle.

7. Transmission à ramification de la puissance selon la revendication 1, **caractérisée en ce que** les éléments de commande ménagés sur une surface extérieure (52) du couvercle (2) comprennent un bloc soupape (63).

8. Transmission à ramification de la puissance selon la revendication 1, **caractérisée en ce que** le couvercle (2) comporte un alésage (57) de l'intérieur vers l'extérieur, pour un capteur de vitesse de rotation (58, 60).

9. Transmission à ramification de la puissance selon la revendication 1, **caractérisée en ce que** le couvercle est monté contre une surface latérale du carter.
